# EUROPÄISCHE PATENTSCHRIFT

(11) **EP 2 106 330 B1**
(45) Veröffentlichungstag und Bekanntmachung des Hinweises auf die Patenterteilung: **05.09.2018**
(21) Anmeldenummer: 07822850.9
(22) Anmeldetag: 23.11.2007
(51) Int. Cl.: B25J 9/16

(54) **VERFAHREN ZUR SICHERHEITSGERICHTETEN ABSCHALTUNG VON BEWEGUNGSVORGÄNGEN IM KOLLISIONSFALL**
METHOD FOR THE SAFE SHUTDOWN OF MOVEMENTS IN THE EVENT OF A COLLISION
PROCÉDÉ DE DÉBRANCHEMENT DE SÉCURITÉ DE PROCESSUS DE DÉPLACEMENT EN CAS DE COLLISION

(30) Priorität: 27.11.2006 DE 102006055849
(43) Veröffentlichungstag der Anmeldung: 07.10.2009
(73) Patentinhaber: innotec GmbH, 21224 Rosengarten (DE)
(72) Erfinder: FRIEDRICHS, Jan, 30827 Garbsen (DE); WEDLER, Armin, 30161 Hannover (DE); EHLICH, Martin, 32689 Kalletal (DE); LANGEL, Peter, 53757 Sankt Augustin (DE); WEDEMEYER, Torsten, 32457 Porta Westfalica (DE); ROSENBUSCH, Thomas, 76351 Linkenheim-Hochstetten (DE); WRATIL, Peter, 21224 Rosengarten (DE); VATER, Bernd, 91096 Mörendorf (DE); BOCK, Bernhard, 75223 Niefern-Öschelbrunn (DE)
(74) Vertreter: Dantz, Jan Henning
(86) Internationale Anmeldenummer: PCT/EP2007/062770
(87) Internationale Veröffentlichungsnummer: WO 2008/065057

(56) Entgegenhaltungen:
- EP-A- 1 445 075
- US-A- 5 130 632

## Beschreibung

Die Patentanmeldung bezieht sich auf ein technisches Verfahren, bei dem Bewegungsvorgänge, die Gefahren für Menschen oder Beschädigungen von Materialen nach sich ziehen können, beim Auftreten einer Kollision erkannt und sicher unterbrochen werden können. Das Verfahren kann bei allen Bewegungsabläufen beliebiger Natur zur Anwendung kommen, wobei es sich ganz besonders bei Translationsbewegungen, Handlingsautomaten oder Robotern eignet. Zur Erfüllung der Sicherheitsfunktion ist lediglich die Adaption eines Sensors notwendig, der Bewegungsfunktion aufnimmt, sowie eines Kraftmessungssystems zur Erfassung der Momentankräfte. Aus dem Vergleich beider Messwerte wird ein Signal gewonnen, das Kollisionen erkennt und dann über eine Steuerung oder eine ähnlich geartete Einrichtung eine geeignete Sicherheitsfunktion auslöst.

Bewegungsvorgänge im industriellen Bereich gehören zu den wichtigsten Funktionen innerhalb der Automatisierung. Von besonderer Bedeutung sind hierbei Plazierungsvorgänge oder Transportvorgänge, die mittels Roboter oder Transportbänder ablaufen. Während des Transportvorgangs stellen sowohl die Transporteinrichtungen als auch die transportierten Teile eine hohe Gefahr dar, wenn sich eine Person im Bereich des Transportwegs befindet. Daher werden heute derartige gefahrvolle Transporteinrichtungen vielfach mit Schutzeinrichtungen (z.B. Schutzzäune, Lichtgitter usw.) versehen, damit eine Annäherung einer Person in den gefahrvollen Bereich zu einer sofortigen Abschaltung führt. Diese Schutzeinrichtungen sind aber sehr kostenintensiv und überaus unflexibel. Darüber hinaus bieten sie keinerlei Schutz, wenn Personen direkt mit den Bewegungssystemen Hand-in-Hand arbeiten müssen (z.B. bei der Material-übergabe oder beim Einrichten eines Roboters).

Selbst wenn die Person den Bewegungsablauf der gefährlichen Einrichtung abschätzen kann, so besteht stets die Möglichkeit, dass das Transportsystem durch einen Fehler (z.B. Versagen, fehlerhafte Programmierung usw.) eine völlig unerwartete Bewegung ausführt, die von der Person nicht vorher abzuschätzen war. In diesem Fall ist eine schwerwiegende Verletzung kaum auszuschließen.

Bei einem direkten Kontakt zwischen Personen und den genannten gefahrvollen Maschinen oder Transporteinrichtungen nach dem Stand der Technik sind dagegen bis heute lediglich 2 unterschiedliche Verfahren zur Absicherung der Person oder des Materials bekannt:
- Die Maschine oder Transporteinrichtung verfügt über Antriebe, die oberhalb eines maximalen Kraftmoments abschalten. Im Falle einer Kollision wird dieses Moment überschritten und eine Fortführung der Bewegung abgebrochen. Das Verfahren ist für größere Transporteinrichtungen oder Maschinen ungeeignet, da bereits zum Bewegen hohe Kräfte notwendig sind, die auch bei geringen Abweichungen der Kräftewerte Gefahren für Personen darstellen.
- Der Bewegungsablauf der Maschine oder der Transporteinrichtung wird vor dem tatsächlichen Ablauf aufgenommen (Teach-In). Bei einer späteren Bewegungsdurchführung wird dann der aufgenommene Ablauf mit dem aktuellen verglichen. Eine Abweichung lässt auf eine Kollision schließen. Das Verfahren hat 2 Nachteile, die sich daraus ergeben, dass einerseits ein Teach-In-Ablauf durchgeführt werden muss, und andererseits eine Abweichung nur dann während des aktuellen Bewegungsablaufs auftritt, wenn massive Beeinträchtigungen des Ablaufs vorliegen. Diese sind in der Regel aber derart groß, dass eventuell schwerwiegende Verletzungen auftreten, die während des Bewegungsablaufs vollkommen unentdeckt bleiben.

Die Verfahren, Personen vor den Gefahren der Roboter zu schützen sind beispielsweise in der Literatur genannt (siehe hierzu: Pressemitteilung der Firma KUKA September 2005).

Die EP 1 445 075 A2 offebart einVerfahren zum Überwachen der beweglichen teile einer Maschine, bei der an einem Roboterarm Materialspannungen über einen Messstreifen erfasst werden können.

Es ist daher Aufgabe der vorliegenden Erfindung, ein verbessertes Verfahren zur Vermeidung von Personen- oder Materialschäden an Transport- oder Handlingseinrichtungen zu schaffen.

Diese Aufgabe wird durch ein Verfahren mit den Merkmalen des Anspruches 1 gelöst. Vorteilhafte Weiterbildungen sind in den Unteransprüchen offenbart.
Die vorliegende Erfindung löst das Problem dadurch, dass der Bewegungsablauf sowohl der Transporteinrichtung (Roboter) als auch des transportierten Materials stetig überwacht und so eine Kollision erkannt wird. Durch die besondere Eigenschaft des Verfahrens werden nicht nur Personen geschützt, sondern auch Einrichtungen und Materialen vor Defekten bewahrt.

Das hier vorgestellt Verfahren funktioniert ohne die genannten Nachteile. So sind keine besonderen Antriebe notwendig. Ein Teach-In-Ablauf kann unterbleiben. Bereits kleine Kraftänderungen werden erkannt und damit Personen nachhaltig geschützt.

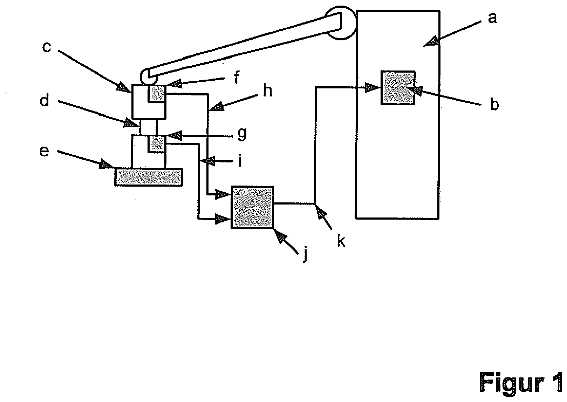

Die Figur 1 stellt die technische Lösung des Verfahrens im Detail dar.

### Figur 1: Prinzipaufbau und Anordnung der Einheiten

Ein Roboter besteht aus einem Montagefuß (a) an dem ein Arm zur Durchführung der Bewegung angebracht ist. Alle Bewegungsabläufe werden durch die interne Steuerung des Roboters (b) bewerkstelligt. Am Arm des Roboters befindet sich der die Roboterhand oder ein weiterer Roboterarm, (c,d), der das zu bewegende Werkstück e festhält. In machen Fällen wird dieser Arm auch als Werkzeug bezeichnet. Entsprechend der Erfindung wird dieses Werkzeug nicht direkt mit dem Werkstück (e) in Verbindung gebracht, sondern über einen Kraftaufnehmer montiert (d). Das eigentliche Werkzeug besteht damit aus zwei Teilen, die durch ein Kraftmesseinrichtung (d) voneinander getrennt sind. Da diese Kraftmesseinrichtung im Wesentlichen starr ausgerichtet ist, kann die gesamte Einheit als Standard-Werkzeug betrachtet werden (c,d). Die beiden Teile des Werkzeugs, die durch den Kraftaufnehmer (d) getrennt sind, enthalten unterschiedliche Sensoren. Einerseits befindet sich am oberen Teil (c) einen Bewegungssensor (f), der alle Raumbewegungen des Werkzeugs aufnimmt und über die Datenleitung (h) weitergibt. Andererseits enthält der untere Teil eine Übertragungseinheit (g), die alle auftretenden Kräfte der Kraftmesseinrichtung (d) erfasst und diese über eine Datenleitung (i) weiterleitet. Die beiden über die Datenleitungen i und h gesendeten Daten werden in der Vergleichseinheit j auf Plausibilität verglichen und der Steuerung b über die Datenleitung k zugeführt. Im Falle einer Abweichung der berechneten Plausibilität in der Einheit j erfolgt eine sofortige Abschaltung des Roboterantriebs über die Datenleitung k in der Steuerung b.

Die Einheit j führt zur Kontrolle der Plausibilität folgende Verarbeitung durch:
Die Daten des Sensors f geben die direkten Beschleunigungsdaten wieder. Diese können beispielsweise durch die Beschleunigungen in kartesischen Koordinaten dargestellt werden (d²x/dt², d²y/dt², d²z/dt²). Derartige Sensoren sind in verschiedenen Technologien erhältlich und leicht an dem Roboterarm adaptierbar. Sofern Sensoren zum Einsatz kommen, die Orts- oder Geschwindigkeitswerte abgeben, erfolgt die Berechung der Beschleunigungen über die zeitlichen Ableitungen. Der Bewegungsablauf darf während des Materialtransports keine gravierenden Änderungen zeigen. Damit befinden sich die Werte für die Beschleunigung (d²x/dt², d²y/dt², d²z/dt²) innerhalb eines kleinen vorgegeben Toleranzfensters. Eine Kollision mit einem Gegenstand (also auch einer Person) stellt eine Überschreitung des Toleranzfensters dar. In diesem Fall erfolgt sofort eine Abschaltung der Antriebe über die Steuerung b.

Zusätzlich wird über die Kraftmesseinheit d und die Sensorik g die tatsächliche Kraft aufgenommen, die durch das transportierende Teil e ausgelöst wird. Sofern das Teil durch keine besonders großen Trägheitsmomente geprägt ist, stellt sich die Kraft durch die Größen m*d²x/dt², m*d²y/dt², m*d²z/dt² dar. Sofern man also die Masse m des Teils e kennt, kann ein sofortiger Vergleich der Sensordaten von f und g erfolgen. Die Masse lässt sich sehr leicht dadurch bestimmen, dass man eine Wägung durch den Sensor g beim Aufnehmen des Teils e durchführt. Wenn die Form des Teils e einen wesentlichen Beitrag zu einem Trägheitsmoment enthält (z.B. längliche Form) müssen auch noch Trägheitskräfte berücksichtigt werden. Diese ergeben sich aus M*dq²/dt². Hierbei ist M das Trägheitsmoment und q der Bewegungswinkel. Auch diese Größe lässt sich bei der Aufnahme des Teils e durch eine leichte Kippbewegung ermitteln. Im Zusammenwirken der beiden Sensordaten f und i ist eine Kollision schnell abzuschätzen, sofern man die Bewegung durch den Sensor f aufnimmt und dann stetig die Kraft durch die Einheit j berechnet. Eine Kollision wird dann durch 2 Verfahren erkannt:
- Plötzliche Änderung der Bewegung alleine durch Aufnahme der Daten von f
- Plötzliche Abweichung der Kraftmesswerte durch den Sensor i, die nicht mit den Daten von f übereinstimmen (in diesem Fall führt der Roboter beispielsweise seine Bewegung weiter durch, allerdings wird bereits eine Person berührt, die zusätzliche Kräfte auf das Teil e ausübt).

Je nach geforderter Sicherheitskategorie ist die Einheit j und b eventuell auch zweikanalig auszulegen, damit im Versagensfall eine sichere Abschaltung zustande kommt.

## Patentansprüche

1. Verfahren zur Vermeidung von Personen- oder Materialschäden an Transport- oder Handlingseinrichtungen, **dadurch gekennzeichnet, dass** eine Wägung durch einen ersten Sensor in Form einer Kraftmesseinrichtung (d) beim Aufnehmen eines Teils durchgeführt wird und ein zweiter Bewegungssensor (f) alle Raumbewegungen eines Werkzeuges aufnimmt, an der Transportvorrichtung der Bewegungssensor (f) als Trägheitsmesssensor adaptiert ist, , wobei die Daten der Kraftmesseinrichtung (d) und des Bewegungssensors (f) in einer Vergleichseinheit (j) auf Plausibilität verglichen werden und durch Prüfung der Plausibilität eine Kollision feststellt und damit eine geeignete Sicherheitsfunktion auslöst werden kann.

2. Verfahren nach Anspruch 1, **dadurch gekennzeichnet, dass** durch die Kontrolle der Kraftmesseinrichtung (d) alleine eine Kollision erkennbar ist, wenn eine spontane Abweichung außerhalb eines Toleranzbereichs vorliegt.

3. Verfahren nach den Ansprüchen 1 bis 2, **dadurch gekennzeichnet, dass** eine Kollision aufdeckbar ist, wenn die Aufnahme der Bewegungsdaten eine spontane Abweichung des Bewegungsablaufs feststellt.

4. Verfahren nach den Ansprüchen 1 bis 3, **dadurch gekennzeichnet, dass** die Greifeinrichtung des Transportsystems über ein Kräftemesssystem von der Bewegungseinrichtung getrennt ist und damit eine direkt Messung der Kräfte ermöglicht wird.

5. Verfahren nach den Ansprüchen 1 bis 4, **dadurch gekennzeichnet, dass** eine Verarbeitungseinheit verwendet wird, die Bewegungsdaten in Kraftdaten umrechnet und diese mit den gemessenen Kraftdaten vergleicht.

6. Verfahren nach den Ansprüchen 1 bis 5, **dadurch gekennzeichnet, dass** die Verarbeitungseinheit bei einer Abweichung eine Sicherheitsfunktion ausführt.

7. Verfahren nach den Ansprüchen 1 bis 6, **dadurch gekennzeichnet, dass** die Verarbeitungseinheit je nach Sicherheitsklassifizierung ein- oder mehrkanalig ausgelegt werden kann.

8. Verfahren nach den Ansprüchen 1 bis 7, **dadurch gekennzeichnet, dass** das Verfahren zum Einsatz bei Robotern bei der Handhabung von Materialen eingsetzt wird.

9. Verfahren nach den Ansprüchen 1 bis 8, **dadurch gekennzeichnet, dass** neben Personen auch Materialen geschützt werden.

10. Verfahren nach den Ansprüchen 1 bis 9, **dadurch gekennzeichnet, dass** das Verfahren bei einer nachträglichen Installation an Transportsystemen oder Robotern eingesetzt wird.

11. Verfahren nach den Ansprüchen 1 bis 10, **dadurch gekennzeichnet, dass** alle notwendigen Messgrößen beim ersten Aufnehmen oder Bewegen des zu transportieren Teils ermittelt werden.

## Claims

1. Method for avoiding personal injury or material damage in relation to transport or handling devices, **characterized in that** a weighing is performed by a first sensor in the form of a force measuring device (d) when picking up a part and a second motion sensor (f) records all room movements of a tool, on the transport device of which the motion sensor (f) is adapted as an inertial measurement sensor, wherein the data of the force measuring device (d) and the motion sensor (f) are compared in a comparison unit (j) for plausibility and a collision is determined by checking the plausibility and thus a suitable safety function can be triggered.

2. Method according to claim 1, **characterized in that** a collision is recognizable alone by checking the force measuring device (d) if a spontaneous deviation is present outside a tolerance range.

3. Method according to claims 1 to 2, **characterized in that** a collision can be detected if the recording of the movement data determines a spontaneous deviation of the movement sequence.

4. Method according to claims 1 to 3, **characterized in that** the gripping device of the transport system is separated by a force measuring system from the moving device and thus a direct measurement of the forces is possible.

5. Method according to claims 1 to 4, **characterized in that** a processing unit is used which converts movement data into force data and compares said data with the measured force data.

6. Method according to claims 1 to 5, **characterized in that** the processing unit carries out a safety function in case of a deviation.

7. Method according to claims 1 to 6, **characterized in that** the processing unit can be designed according to safety classification with one or more channels.

8. Method according to claims 1 to 7, **characterized in that** the method is used for use in robots in the handling of materials.

9. Method according to claims 1 to 8, **characterized in that** materials are also protected in addition to persons.

10. Method according to claims 1 to 9, **characterized in that** the method is used in a subsequent installation on transport systems or robots.

11. Method according to claims 1 to 10, **characterized in that** all necessary measured variables are determined when first picking up or moving the part to be transported.

## Revendications

1. Procédé pour éviter des dommages corporels ou matériels sur des dispositifs de transport ou de manutention, **caractérisé en ce qu'**une pesée est effectuée par un premier capteur sous la forme d'un dispositif de mesure de force (d) lorsqu'une pièce est saisie et qu'un second capteur de déplacement (f) enregistre tous les déplacements dans l'espace d'un outil, lequel capteur de déplacement (f) est adapté sur le dispositif de transport en tant que capteur de mesure d'inertie, les données du dispositif de mesure de force (d) et du capteur de déplacement (f) étant comparées quant à leur plausibilité dans une unité de comparaison (j), le contrôle de la plausibilité permettant de détecter une collision et ainsi de déclencher une fonction de sécurité appropriée.

2. Procédé selon la revendication 1, **caractérisé en ce qu'**une collision peut être détectée par le contrôle du dispositif de mesure de force (d) seul s'il existe une déviation spontanée en dehors d'une plage de tolérance.

3. Procédé selon les revendications 1 à 2, **caractérisé en ce qu'**une collision peut être détectée si l'enregistrement des données de déplacement constate une déviation spontanée de la séquence de déplacement.

4. Procédé selon les revendications 1 à 3, **caractérisé en ce que** le dispositif de préhension du système de transport est séparé du dispositif de déplacement au moyen d'un système de mesure de force, ce qui permet une mesure directe des forces.

5. Procédé selon les revendications 1 à 4, **caractérisé en ce que** l'on utilise une unité de traitement qui convertit les données de déplacement en données de force et compare celles-ci avec les données de force mesurées.

6. Procédé selon les revendications 1 à 5, **caractérisé en ce que** l'unité de traitement exécute une fonction de sécurité en cas de déviation.

7. Procédé selon les revendications 1 à 6, **caractérisé en ce que** l'unité de traitement peut être conçue à un ou plusieurs canaux en fonction de la classification de sécurité.

8. Procédé selon les revendications 1 à 7, **caractérisé en ce que** le procédé est utilisé sur des robots pour la manipulation de matériaux.

9. Procédé selon les revendications 1 à 8, **caractérisé en ce qu'**outre les personnes, les matériaux sont protégés.

10. Procédé selon les revendications 1 à 9, **caractérisé en ce que** le procédé est utilisé dans le cas d'une installation ultérieure sur des systèmes de transport ou des robots.

11. Procédé selon les revendications 1 à 10, **caractérisé en ce que** toutes les grandeurs de mesure nécessaires sont déterminées lorsque la pièce à transporter est saisie ou déplacée pour la première fois.
